# EUROPÄISCHE PATENTANMELDUNG

(11) **EP 1 102 144 A2**
(43) Veröffentlichungstag der Anmeldung: **23.05.2001**
(21) Anmeldenummer: 00203596.2
(22) Anmeldetag: 16.10.2000
(51) Int. Cl.: G05D 23/02

(54) **Ventil, insbesondere Thermostatventil für Heizungsanlagen**

(30) Priorität: 17.11.1999 DE 19955264
(71) Anmelder: Danfoss A/S, 6430 Nordborg (DK)
(72) Erfinder: Wiwe, Joergen Seindal, 8355 Solbjerg (DK); Garm, Fester, 8600 Silkeborg (DK); Hoelck, Poul, 8330 Beder (DK)

(57) **Zusammenfassung**

Ein Ventil, insbesondere ein Thermostatventil für Heizungsanlagen besitzt ein Gehäuse (80), einen gehäusefesten Ventilsitz (84) und ein Verschlußstück (85), das mittels eines durch eine Dichtvorrichtung (92) nach außen geführten Stifts (91) zu betätigen ist. Zum Befestigen eines Betätigungsaufsatzes ist eine Anschlußvorrichtung (98) vorgesehen, die eine Anlagefläche (97) in einem ersten Abstand (A) vom freien Ende des Stifts (91) und eine zugehörige erste Spannfläche aufweist. Zum Befestigen wenigstens eines zweiten Typs eines Betätigungsaufsatzes ist mit dem Gehäuse (80) ein Außengewinde (101) als zweite Spannfläche und eine benachbarte Anlagefläche (97) verbunden. Im Gehäuse (80) ist ein Anschlußelement (95), das die Dichtvorrichtung (92) trägt, axial aus einer ersten Stellung, in der die erste Spannfläche frei liegt, in mindestens eine zweite Stellung verschiebbar. Zwischen dem Stift (91) und dem Verschlußstück (85) ist eine eine Abstandsänderung berücksichtigende Ausgleichskupplung (89) vorgesehen. Auf diese Weise ergibt sich ein Ventil, das alle Mittel aufweist, um wahlweise einen von mindestens zwei unterschiedlichen Betätigungsaufsatz-Typen anzubringen. Die Ausgleichskupplung ermöglicht es hierbei, einen gehäusefesten Ventilsitz vorzusehen.

## Beschreibung

Die Erfindung betrifft ein Ventil, insbesondere Thermostatventil für Heizungsanlagen, mit einem Gehäuse, einem mit einem Ventilsitz zusammenwirkenden Verschlußstück, das mittels eines durch eine Dichtvorrichtung nach außen geführten Stifts zu betätigen ist, und mit einer Anschlußvorrichtung zum Befestigen eines Betätigungsaufsatzes, die eine Anlagefläche in einem ersten Abstand vom freien Ende des Stifts und eine zugehörige erste Spannfläche aufweist.

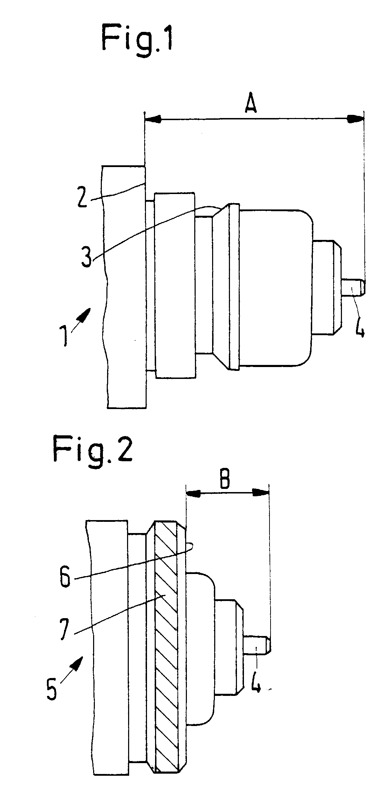

Damit am Ventil ein Betätigungsaufsatz angebracht werden kann, ist am Ventilgehäuses eine Anschlußvorrichtung erforderlich, die dem Typ des Betätigungsaufsatzes entspricht. Die meisten auf dem Markt befindlichen Ventile haben Anschlußvorrichtungen, wie sie in den Fig. 1 und 2 veranschaulicht sind. Bei der eine erste Form aufweisende Anschlußvorrichtung 1 ist eine Anlagefläche 2 vorgesehen, gegen die der Sockel des Betätigungsaufsatzes angepreßt wird, indem eine radiale Kraft an einer konusförmigen Spannfläche 3 in die Axialrichtung umgelenkt wird. Der Abstand A zwischen der Anlagefläche 2 und dem freien Ende des der Betätigung des Verschlußstücks dienenden Stiftes 4 beträgt etwa 30 mm. Ein Beispiel hierfür ist in der DE 32 36 372 C2 veranschaulicht. Bei der eine zweite Form aufweisenden Anschlußvorrichtung 5 ist die Anlagefläche 6 an der Stirnseite einer als Gewinde ausgeführten Spannfläche 7 vorgesehen. Durch Aufschrauben einer mit einem Innenflansch versehenen Überwurfmutter wird der Sockel des Betätigungsaufsatzes gegen die Anlagefläche 6 gedrückt.

Die Spannfläche 7 besitzt ein M30 x 1,5 Gewinde. Der Abstand B zwischen der Anlagefläche 6 und dem freien Ende des Ventilstiftes 4 beträgt etwa 10 mm. Ein Beispiel hierfür ist in DE 43 44 773 A1 veranschaulicht. Weitere Anschlußvorrichtungen unterscheiden sich von der Anschlußvorrichtung 5 dadurch, daß der Abstand B etwas größer ist, beispielsweise etwa 20 mm beträgt.

Es ist ferner bekannt (DE 94 11 056 U1), ein und dasselbe Ventil zum Anschluß von zwei oder mehr Typen eines Betätigungsaufsatzes geeignet zu machen, indem ein Adapter, also ein Zusatzbauteil, zwischen Ventil und Betätigungsaufsatz geschaltet wird. Der Heizungsbauer kann daher bei Reparaturarbeiten mit wenigen Ersatzteilen, die er mitführen muß, auskommen. Er kann auch Ventile und Betätigungsaufsätze unterschiedlicher Firmen miteinander kombinieren. Allerdings hat es sich gezeigt, daß die bei einer bestimmten Nutzungsart nicht benötigten Zusatzbauteile oder Adapter zu dem Zeitpunkt, an dem sie benötigt werden, häufig nicht zur Verfügung stehen, sei es daß sie verlorengegangen oder aufgebraucht sind.

Der Erfindung liegt demgegenüber die Aufgabe zugrunde, ein Ventil der eingangs beschriebenen Art anzugeben, das alle Mittel aufweist, um wahlweise einen von mindestens zwei unterschiedlichen Betätigungsaufsatz-Typen anzubringen.

Diese Aufgabe wird erfindungsgemäß dadurch gelöst, daß zum Befestigen wenigstens eines zweiten Typs eines Betätigungsaufsatzes mit dem Gehäuse ein Außengewinde als zweite Spannfläche und eine benachbarte Anlagefläche verbunden ist, daß im Gehäuse ein Anschlußelement, das die Dichtvorrichtung trägt, axial aus einer ersten Stellung, in der die erste Spannfläche frei liegt, in mindestens eine zweite Stellung verschiebbar ist, und daß zwischen dem Stift und dem Verschlußstück eine eine Abstandsänderung berücksichtigende Ausgleichskupplung vorgesehen ist.

Durch die Einführung axial verschiebbarer Teile gelingt es, mindestens zwei unterschiedliche Formen zu schaffen, die wahlweise für das Anbringen eines ersten oder zweiten Typs eines Betätigungsaufsatzes geeignet sind.

Die Ausgleichskupplung ermöglicht es, trotz der Verstellung des mit dem Anschlußelement verbundenen Stiftes mit einem Ventilsitz zu arbeiten, der gehäusefest angeordnet ist oder eine feste Zuordnung zum Gehäuse hat, so daß im übrigen nur geringfügige Änderungen am Ventil vorgenommen zu werden brauchen.

Von Vorteil ist es, daß die erste Spannfläche eine Konusfläche ist. Dies berücksichtigt den größten Teil der auf dem Markt befindlichen Betätigungsaufsätze.

Günstig ist es, daß die Ausgleichskupplung eine Reibungskupplung ist. Eine solche Reibungskupplung läßt sich bei Abstützung des Verschlußstücks auf dem Sitz leicht von außen betätigen, behält dann aber die so eingenommene Stellung im Betrieb bei, da im Ventil keine oder höchstens geringfügige Änderungskräfte auftreten.

Eine besonders einfache Konstruktion ergibt sich dadurch, daß die Reibungskupplung durch einen in eine Bohrung gesteckte Stange gebildet ist.

Von Vorteil ist es, daß ein Teil des Anschlußelements in mindestens zwei axial versetzten Stellungen arretierbar ist. In den arretierten Stellungen ergeben sich zwei oder mehr Formen, die zur Befestigung von Betätigungsaufsätzen verschiedener Typen geeignet sind.

Bei einer bevorzugten Ausführungsform ist dafür gesorgt, daß die Arretierung durch Eingriff von Rastvorsprüngen an einem Führungszylinder in Rastvertiefungen einer von mehreren Gruppen an einer Führungsbohrung des Gehäuses erfolgt. Es genügen geringe Rastkräfte, um die Arretierung zu bewirken.

Von Vorteil ist es ferner, daß das Anschlußelement zweiteilig ist, wobei das den Dichteinsatz tragende erste Teil von dem die Konusfläche tragenden zweiten Teil umgeben und deren Relativbewegung durch Anschläge begrenzt ist. Durch die Unterteilung des Anschlußelements ist es möglich, auf einfache Weise wenigstens drei Stellungen und damit drei Anschlußvorrichtungen zur Anpassung an verschiedene Typen von Betätigungsaufsätzen zu schaffen.

Des weiteren ist es von Vorteil, daß das zweite Teil durch einen eine begrenzte Axialbewegung zulassenden Sprengring am Gehäuse abgestützt ist. Diese Maßnahme hilft, den Verstellweg der Ausgleichskupplung kurz zu gestalten.
Vorteilhaft ist es, daß ein das Außengewinde und die Anlagefläche tragender Ring zusätzlich relativ zum Gehäuse verstellbar ist, um den Abstand zwischen Anlagefläche und freiem Ende des Stiftes klein zu halten. Hierdurch kann der Einschubweg des Anschlußelements kürzer sein.

Die Erfindung wird im folgenden anhand bevorzugter Ausführungsbeispiele in Verbindung mit der Zeichnung näher beschrieben. Hierin zeigen:
- Fig. 1: eine schematische Darstellung einer Anschlußvorrichtung für einen ersten Typ eines Betätigungsaufsatzes nach dem Stand der Technik,
- Fig. 2: eine schematische Darstellung einer Anschlußvorrichtung für einen zweiten Typ eines Betätigungsaufsatzes gemäß dem Stand der Technik,
- Fig. 3: einen Längsschnitt durch ein Ventil gemäß der Erfindung mit einer Anschlußvorrichtung entsprechend Fig. 1,
- Fig. 4: einen Längsschnitt durch das Ventil der Fig. 3 mit einer Anschlußvorrichtung entsprechend Fig. 2,
- Fig. 5: einen Längsschnitt durch ein abgewandeltes Ventil gemäß der Erfindung mit einer Anschlußvorrichtung entsprechend Fig. 1,
- Fig. 6: einen Längsschnitt durch das Ventil der Fig. 5 mit einer weiteren Anschlußvorrichtung und
- Fig. 7: einen Längsschnitt durch das Ventil der Fig. 5 mit einer Anschlußvorrichtung entsprechend Fig. 2.

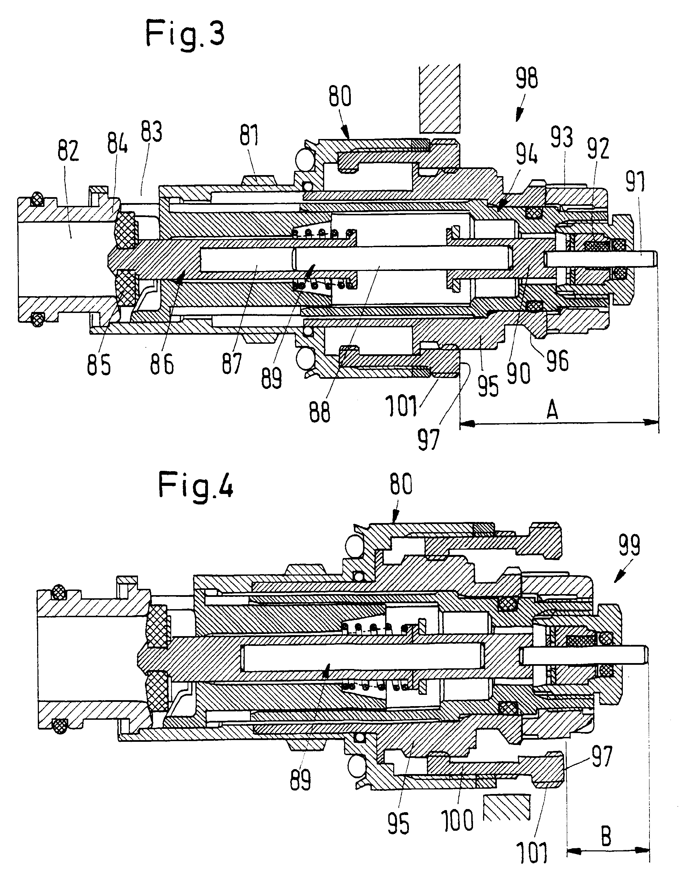

Die Fig. 3 und 4 zeigen ein Einbauventil, dessen Gehäuse 80 mittels eines Außengewindes 81 in einen Heizkörper eines Heizungssystems eingeschraubt werden kann. Das Gehäuse 80 weist einen Zuflußstutzen 82 und eine Abflußöffnung 83 sowie dazwischen einen Ventilsitz 84 auf, mit dem ein Verschlußstück 85 zusammenwirkt.

Das Verschlußstück 85 ist über eine Ventilstange 86, die mit einer Bohrung 87 versehen ist, sowie eine Stange 88, die mit der Bohrung 87 eine Ausgleichskupplung 89 bildet, und ein weiteres Zwischenstück 90 mit einem Stift 91 verbunden, der von einem aufgespannten Betätigungsaufsatz verschoben wird. Der Stift 91 durchsetzt eine Dichtvorrichtung 92, die ihrerseits von einem Verstellring 93 einer Voreinstellvorrichtung 94 für den kᵥ-Wert umgeben ist. Dieser Verstellring hat Sechseck-Querschnitt und kann den montierten Betätigungsaufsatz gegen Drehung sichern.

Ein im Gehäuse 80 angeordnetes inneres Anschlußelement 95 trägt die Dichtvorrichtung 92 und eine als erste Spannfläche dienende Konusfläche 96. Dieser Konusfläche ist eine Anlagefläche 97 zugeordnet, so daß sich eine Anschlußvorrichtung 98 entsprechend Fig. 1 mit dem Abstand A zwischen der Anlagefläche 97 und dem freien Ende des Stiftes 91 ergibt.

Eine Anschlußvorrichtung 99 gemäß Fig. 2 ergibt sich auf folgende Weise: Das im Gehäuse 80 angeordnete innere Anschlußelement 95 wird in das Ventilgehäuse 80 bis zum Anschlag hineingedrückt. Gleichzeitig wird ein ebenfalls im Gehäuse geführtes äußeres Anschlußelement 100 in entgegengesetzter Richtung bewegt. Es weist nicht nur die Anlagefläche 97 sondern auch ein Außengewinde 101 mit der Abmessung M30 x 1,5 auf. Beim Einwärtsschieben des Anschlußelements 95 tritt die Ausgleichskupplung 89 in Tätigkeit. Die Stange 88 wird aufgrund der ausgeübten Kraft in die Bohrung 87 hineingeschoben, wodurch sich der Abstand zwischen dem Stift 91 und dem Verschlußstück 84 verringert.

Das Ventil wird in der Stellung der Fig. 3 geliefert und kann ohne Schwierigkeiten aber irreversibel in die Stellung der Fig. 4 überführt werden.

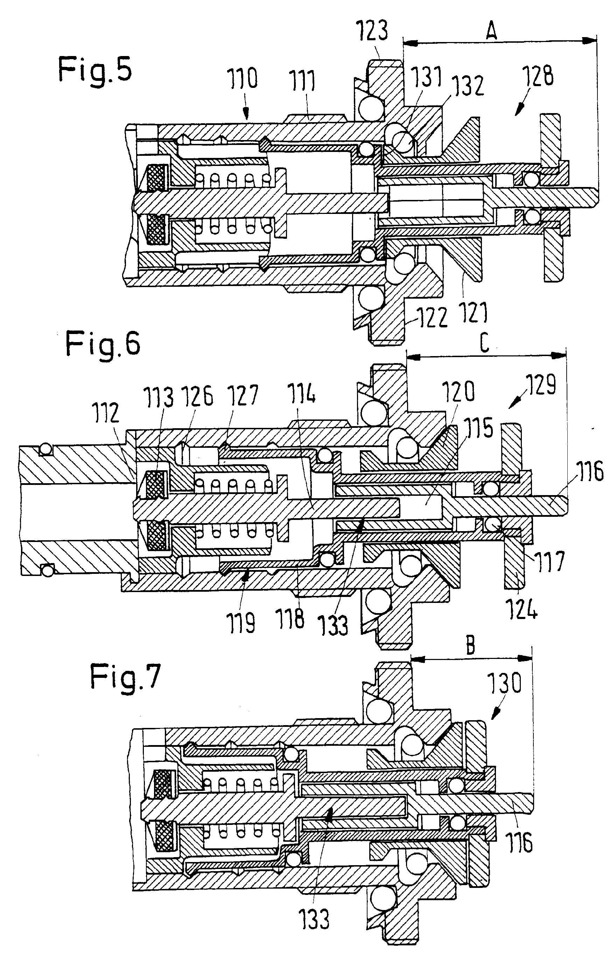

Bei der Ausführungsform der Fig. 5 bis 7 ist wiederum ein Einbauventil veranschaulicht, dessen Gehäuse 110 mittels seines Außengewindes 111 in einen Heizkörper eingeschraubt werden kann. Wiederum arbeitet ein gehäusefester Sitz 112 mit einem Verschlußstück 113 zusammen. Dessen Stange 114 greift (was nur angedeutet ist) reibungsschlüssig in eine Bohrung 115, die mit einem Stift 116 verbunden ist, der durch eine Dichtvorrichtung 117 nach außen geführt ist.

Die Dichtvorrichtung 117 wird vom inneren Teil 118 eines Anschlußelements 119 getragen, während ein äußerer Teil 120, der auf dem inneren Teil axial verschiebbar ist, eine Konusfläche 121 aufweist. Am Gehäuse 110 ist eine Anlagefläche 122 und ein Außengewinde 123 angebracht.

Durch Angreifen an einem Anschlag 124 kann das äußere Teil 118 des Anschlußelements 119 in eine der drei Stellungen der Fig. 5 bis 7 gebracht werden. In diesen Stellungen wird das Teil 118 arretiert, weil mindestens ein Rastvorsprung 125 in eine von drei Rastvertiefungen 126 einrastet. Auf diese Weise ergeben sich die drei Anschlußvorrichtungen 128, 129 und 130.

Bei der Anschlußvorrichtung 128 drückt ein Anschlag 131 das äußere Teil 120 des Anschlußelements 119 nach außen, so daß die Konusfläche 121 frei liegt und mit der Anlagefläche 122 zusammenwirken kann. Ein Sprengring 132 sichert das Teil 120 gegen Herausfallen. Dies entspricht der Anschlußvorrichtung der Fig. 1.

Wird das äußere Teil 118 des Anschlußelements 119 in die Stellung der Fig. 6 bewegt, wird die Stange 114 in die Bohrung 115 geschoben, so daß diese Teile eine Ausgleichskupplung 133 bilden, die als Reibungskupplung ausgeführt ist. In dieser Stellung wirkt die Anlagefläche 122 mit dem Außengewinde 133 zusammen, so daß die Anschlußvorrichtung 129 derjenigen der Fig. 2, aber mit einem größeren Abstand C zwischen Anlagefläche und freiem Ende des Stiftes 116 entspricht.

Durch weiteres Einschieben des äußeren Teils 118 des Anschlußelements 119 gelangt man zur Anschlußvorrichtung 130, bei der der Abstand B zwischen Anlagefläche 122 und freiem Ende des Stiftes 116 etwa 10 mm beträgt.

Die Ausgleichskupplung 89, 133 kann auch auf andere Weise verwirklicht werden, beispielsweise durch ein Gewinde oder durch axial versetzte Stufen an Stange 114 und/oder Bohrung 115, die durch eine Relativdrehung wirksam gemacht werden. Eine Reibungskupplung könnte auch direkt zwischen Ventilstange und Verschlußstück ausgeführt werden, so daß die Ventilstange durch den Ventilsitz geschoben wird.

## Patentansprüche

1. Ventil, insbesondere Thermostatventil für Heizungsanlagen, mit einem Gehäuse, einem mit einem Ventilsitz zusammenwirkenden Verschlußstück, das mittels eines durch eine Dichtvorrichtung nach außen geführten Stifts zu betätigen ist, und mit einer Anschlußvorrichtung zum Befestigen eines Betätigungsaufsatzes, die eine Anlagefläche in einem ersten Abstand vom freien Ende des Stifts und eine zugehörige erste Spannfläche aufweist, dadurch gekennzeichnet, daß zum Befestigen wenigstens eines zweiten Typs eines Betätigungsaufsatzes mit dem Gehäuse ein Außengewinde (101, 123) als zweite Spannfläche und eine benachbarte Anlagefläche (97; 122) verbunden ist, daß im Gehäuse (80; 110) ein Anschlußelement (95; 119), das die Dichtvorrichtung (92; 117) trägt, axial aus einer ersten Stellung, in der die erste Spannfläche frei liegt, in mindestens eine zweite Stellung verschiebbar ist, und daß zwischen dem Stift (91; 116) und dem Verschlußstück (85; 113) eine eine Abstandsänderung berücksichtigende Ausgleichskupplung (89; 133) vorgesehen ist.

2. Ventil nach Anspruch 1, dadurch gekennzeichnet, daß die erste Spannfläche eine Konusfläche (96; 121) ist.

3. Ventil nach Anspruch 1 oder 2, dadurch gekennzeichnet, daß die Ausgleichskupplung (89; 133) eine Reibungskupplung ist.

4. Ventil nach Anspruch 3, dadurch gekennzeichnet, daß die Reibungskupplung durch einen in eine Bohrung (87; 115) gesteckte Stange (88; 114) gebildet ist.

5. Ventil nach einem der Ansprüche 1 bis 3, dadurch gekennzeichnet, daß ein Teil (118) des Anschlußelements (119) in mindestens zwei axial versetzten Stellungen arretierbar ist.

6. Ventil nach Anspruchs, dadurch gekennzeichnet, daß die Arretierung durch Eingriff von Rastvorsprüngen (127) an einem Führungszylinder in Rastvertiefungen (126) einer von mehreren Gruppen an einer Führungsbohrung des Gehäuses (110) erfolgt.

7. Ventil nach einem der Ansprüche 1 bis 6, dadurch gekennzeichnet, daß das Anschlußelement (119) zweiteilig ist, wobei das den Dichteinsatz (117) tragende erste Teil (118) von dem die Konusfläche (121) tragenden zweiten Teil (120) umgeben und deren Relativbewegung durch Anschläge (124, 131) begrenzt ist.

8. Ventil nach Anspruch 7, dadurch gekennzeichnet, daß das zweite Teil (120) durch einen eine begrenzte Axialbewegung zulassenden Sprengring (132) am Gehäuse (110) abgestützt ist.

9. Ventil nach einem der Ansprüche 1 bis 8, dadurch gekennzeichnet, daß ein das Außengewinde (101) und die Anlagefläche (97) tragender Ring (100) zusätzlich relativ zum Gehäuse (80) verstellbar ist, um den Abstand zwischen Anlagefläche (97) und freiem Ende des Stiftes (91) klein zu halten.
